# EUROPÄISCHE PATENTSCHRIFT

(11) **EP 1 478 044 B1**
(45) Veröffentlichungstag und Bekanntmachung des Hinweises auf die Patenterteilung: **09.02.2011**
(21) Anmeldenummer: 03010619.9
(22) Anmeldetag: 12.05.2003
(51) Int. Cl.: H01M 8/04, H01M 8/06

(54) **Überwachung der Brennstoffversorgung eines Brennstoffzellensystems**
Fuel supply monitoring of a fuel cell system
Système de surveillance d'alimentation en combustible d'une pile à combustible

(43) Veröffentlichungstag der Anmeldung: 17.11.2004
(73) Patentinhaber: SFC Energy AG, 85649 Brunnthal (DE)
(72) Erfinder: Harbusch, Volker, 81371 München (DE); Sonntag, Christoph, 85591 Vaterstetten (DE); Müller, Jens, Dr., 81827 München (DE); Preissner, Marcus, Dr., 81543 München (DE); Rabenseifner, Peter, 82140 Olching (DE); Rothkopf, Kurt, 81539 München (DE); Böhm, Christian, 85635 Höhenkirchen-Siegertsbrunn (DE)
(74) Vertreter: Grünecker, Kinkeldey, Stockmair & Schwanhäusser Anwaltssozietät

(56) Entgegenhaltungen:
- EP-A- 1 205 341
- EP-A- 1 306 919
- US-A- 5 528 148

## Beschreibung

### Gebiet der Erfindung

Die Erfindung betrifft ein Verfahren und eine Vorrichtung zum Überwachen der Brennstoffversorgung eines Brennstoffzellensystems und zum Schützen des Brennstoffzellensystems vor Schäden oder gar Zerstörung, wenn dem Brennstoffzellensystem kein oder zu wenig Brennstoff zugeführt wird.

### Stand der Technik

Im Gegensatz zu Verbrennungsmotoren werden Brennstoffzellen schon nach kurzer Zeit beschädigt, wenn eine Unterversorgung mit Brennstoff auftritt und die Brennstoffzelle nicht rechtzeitig abgeschaltet wird. Die Ursachen dafür liegen in den brennstoffzellenspezifischen elektrochemischen Vorgängen begründet: An der Anode einer Brennstoffzelle läuft immer eine Oxidationsreaktion ab. Solange genügend Brennstoff zugeführt wird, wird dieser oxidiert. Bei unzureichender Brennstoffzufuhr aber kommt es zu einer Unterversorgung der Brennstoffzelle oder einzelner Zellen oder Zellbereiche. In diesen unterversorgten Bereichen findet nun eine andere Oxidationsreaktion statt: je nach den vorliegenden Verhältnissen werden Materialien der Zelle oxidativ zerstört (z.B. Katalysatoren, Bipolarplatten) oder/und es findet Elektrolyse gegebenenfalls vorhandenen Wassers statt. In nahezu jedem Fall führt dies zu Schäden an der Brennstoffzelle, die entweder irreparabel sind, oder aber nur unter unverhältnismäßig hohem Aufwand beseitigt werden können.

Eine Unterversorgung mit Brennstoff kann als Folge von Störungen, Defekten und Fehlfunktionen unterschiedlichster Arten auftreten: Typische Ursachen sind z.B. Lecks in der Brennstoffzuleitung, leere Brennstofftanks, degradierte Förderpumpen, defekte Sensoren, fehlerhafte Ermittlung des momentanen Brennstoffbedarfs. Schon kleine, an sich nahezu unbedeutende Fehler oder Abweichungen in der Funktion einzelner Komponenten können somit zur Zerstörung der in der Regel teuersten Komponente des Gesamtsystems führen.

Eine Unterversorgung mit Brennstoff kann aber auch im Normalbetrieb vorkommen, wenn z.B. der Brennstoffvorrat in einem Brennstoffvorratsbehälter zur Neige geht. Da es aus Kosten-, Sicherheits- und ökologischen Gründen wünschenswert ist, dass eine Tankpatrone vollständig entleert wird, bevor sie entsorgt oder wiederbefüllt wird, ist Letzteres eine latente Gefahr bei Systemen, bei denen eine Brennstoffzelle mit einer austauschbaren Tankpatrone betrieben wird. In der Praxis wird i.d.R. auf ein vollständiges Entleeren der Tankpatrone verzichtet, da in der Brennstoffzelle bereits innerhalb von Sekunden nach der vollständigen Entleerung der Tankpatrone Schäden auftreten würden. Obwohl solche Tankpatrone zum Teil mit einer Füllstandsmesseinrichtung ausgestattet sind, ist eine permanente Überwachung des Füllstands einer (oft in einem Patronenfach eingebauten) Patrone für einen Benutzer nicht zumutbar.

Das Dokument EP 1 306 919 offenbart eine Überwachungsvorrichtung zur Überwachung einer Brennstoffvorrats in einem Brennstoffvorratbehälter nach dem Stand der Technik.

### Beschreibung der Erfindung

Angesichts der oben genannten Probleme ist es daher die Aufgabe dieser Erfindung, Brennstoffzellensysteme vor Beschädigungen durch Unterversorgung mit Brennstoff zu schützen.

Diese Aufgabe wird durch das in Anspruch 1 definierte erfindungsgemäße Verfahren, sowie durch die in Anspruch 8 definierte Überwachungsvorrichtung gelöst. Die erfindungsgemäße Lösung ist ferner bei dem im Anspruch 11 angegebenen Brennstoffzellensystem implementiert.

Das erfindungsgemäße Verfahren zum Betreiben eines Brennstoffzellensystems umfasst die folgenden Schritte: Überwachen eines Brennstoffstroms in das Brennstoffzellensystem ; Ausgeben eines Signals, wenn der Brennstoffstrom für eine Brennstoffversorgung des Brennstoffzellensystems nicht ausreichend ist.

Erfindungsgemäß wird also durch Überwachen der Brennstoffversorgung geprüft, ob in unmittelbarer oder absehbarer Zukunft mit einer Unterversorgung des Brennstoffzellensystems zu rechnen ist. Deutet sich eine solche Unterversorgung an , weil die Brennstoffströmung in der Zuleitung zum System abnimmt oder völlig erliegt - so besteht noch ausreichend zeitlicher Spielraum, um das System bzw. seine sensibelsten Komponenten in einen sicheren Betriebszustand zu bringen. Das ausgegebene Signal kann beispielsweise ein akustisches oder optisches Warnsignal sein, dass einen Nutzer auffordert, die notwendigen Maßnahmen durchzuführen. Die Überwachung kann direkt in der Brennstoffzuleitung erfolgen, beispielsweise unter Verwendung eines Durchflussmessers.

Es ist dabei nicht unbedingt erforderlich, dass die Durchflussmenge des Brennstoffstroms absolut gemessen wird. Die Sensoren können vielmehr so ausgebildet sein, dass sie im Normalzustand "stumm" sind (kein Signal ausgeben) und erst dann ein Signal ausgeben, wenn eine vorgegebene Durchflussmenge unterschritten wird (Ausnahmezustand). Der umgekehrte Fall oder Varianten sind natürlich ebenfalls möglich: dass die Sensoren im Normalzustand ein Signal ausgeben und damit im Ausnahmezustand aufhören, oder dass die Sensoren im Normalzustand ein erstes Signal ausgeben und im Ausnahmezustand ein davon verschiedenes zweites Signal ausgeben.

Nur im einfachsten Fall sind die erforderliche Durchflussmenge invariabel vorgegeben. Vorzugsweise werden diese Werte ständig über eine Steuereinheit des Brennstoffzellensystems an den aktuellen Brennstoffverbrauch des Brennstoffzellensystems angepasst.

Das Signal kann ein akustisches, optisches oder anderes Warnsignal sein, das beispielsweise direkt durch den Sensor (die Sensoren) ausgegeben wird und den Betreiber des Systems darauf hinweist, dass Maßnahmen getroffen werden müssen, um die weitere Brennstoffversorgung des Systems sicherzustellen und/oder um das System in einen sicheren Betriebszustand überzuführen, z.B. durch Abschalten der Brennstoffzelle.

Das Signal kann aber auch ein elektrisches oder elektromagnetisches Signal (o.ä.) sein, das an das Brennstoffzellensystem ausgegeben wird, worauf automatisch Vorsorgemaßnahmen eingeleitet werden, beispielsweise indem das Brennstoffzellensystem in einen sicheren Betriebszustand übergeführt wird. Das Signal kann auch an eine externe Steuereinheit für das Brennstoffzellensystem oder eine Steuereinheit des Brennstoffzellensystems ausgegeben werden, worauf die Steuereinheit die Durchführung der erforderlichen Maßnahmen einleitet.

Die Kommunikation zwischen Sensor(en) und Steuereinheit kann in beiderlei Richtungen erfolgen, so dass die Steuereinheit Sollwerte der Sensoren dynamisch an die Betriebsbedingungen des Brennstoffzellensystems anpassen kann und/oder die aktuellen Messwerte des Sensors (der Sensoren) permanent auslesen bzw. zu bestimmten Zeitpunkten abfragen kann.

Die Vorsorgemaßnahmen zum Schützen des Brennstoffzellensystems vor Schäden, wenn der Brennstoffstrom für die Brennstoffversorgung des Brennstoffzellensystems nicht ausreichend ist können auf ein entsprechendes Warnsignal von einer Bedienperson/einem Nutzer des Systems eingeleitet werden. Wie aber bereits oben angedeutet, werden diese Vorsorgemaßnahmen in einer besonders bevorzugten Weiterbildung der Erfindung nach dem Ausgeben des entsprechenden Signals automatisch eingeleitet: so kann das Signal beispielsweise direkt die automatische Abschaltung des Systems bewirken, oder an eine Steuereinheit ausgegeben werden, die geeignete Vorsorgemaßnahmen einleitet.

Alternativ zu Ausführungen, bei denen die (Wam-)Signale durch den Sensor (die Sensoren) ausgeben werden, sind Varianten besonders vorteilhaft, bei denen der Sensor (die Sensoren) lediglich Messwerte an eine Steuereinheit ausgeben, worauf diese durch die Steuereinheit analysiert werden und, wenn der Brennstoffstrom für eine Brennstoffversorgung des Brennstoffzellensystems nicht ausreichend ist , die Steuereinheit selbst das diesbezügliche Signal ausgibt und gegebenenfalls Maßnahmen einleitet. Die ausgegebenen Messwerte können den Brennstoffstrom bzw. die Füllmenge umfassen.

Messsignale müssen nicht permanent vom Sensor ausgegeben werden, sondern können in vorgegebenen zeitlichen Abständen oder erst auf Anfrage (beispielsweise durch eine Steuereinheit) ausgegeben werden.

In einer besonders bevorzugten Weiterbildung der Erfindung umfasst das Einleiten von Vorsorgemaßnahmen das automatische Umschalten des Brennstoffzellensystems in einen sicheren Betriebszustand. Dies kann z.B. ein automatisches Abschalten des Brennstoffzellensystems bedeuten, aber vorzugsweise auch ein Umschalten der Brennstoffzufuhr auf eine alternative Brennstoffversorgungseinrichtung, z.B. einen Reservetank.

Eine Vereinfachung der gesamten Brennstoffzellenanordnung wird durch eine Weiterbildung erreicht, bei der ein Strömen von Brennstoffstrom in das Brennstoffzellensystem durch Erzeugen eines Unterdrucks im Brennstoffzellensystem verursacht wird. In diesem Fall ist keine separate Förderpumpe erforderlich. Die Regelung des Flusses kann durch Regelventil erfolgen, das durch eine Steuereinheit angesteuert wird.

Die erfindungsgemäße Überwachungsvorrichtung für eine Brennstoffversorgungsvorrichtung eines Brennstoffzellensystems umfasst: einen Sensor zum Überwachen eines Brennstoffstroms in das Brennstoffzellensystem , und wenigstens einen Signalgeber zum Ausgeben eines Signals.

Der Signalgeber kann Bestandteil des Sensors, einer Steuereinheit sein, oder aber separat vorgesehen sein. Die Überwachungsvorrichtung ist zum Ausführen des erfindungsgemäßen Verfahrens ausgebildet: ein Signal wird ausgegeben, wenn der Brennstoffstrom für eine Brennstoffversorgung des Brennstoffzellensystems nicht ausreichend ist . Eine detailliertere Beschreibung der Überwachungsvorrichtung und ihrer Weiterbildungen erscheint angesichts der obigen ausführlichen Beschreibung des erfindungsgemäßen Verfahrens nicht erforderlich.

In einer besonders bevorzugten Weiterbildung umfasst die Überwachungsvorrichtung ferner eine Steuereinrichtung zum Empfangen des Signals (der Signale) des Sensors (der Sensoren) und zum Einleiten von Vorsorgemaßnahmen, um das Brennstoffzellensystem vor Schäden zu schützen, wenn der Brennstoffstrom für die Brennstoffversorgung des Brennstoffzellensystems nicht ausreichend ist.

In einer weiteren Weiterbildung umfasst der Sensor zum Überwachen des Brennstoffstroms in das Brennstoffzellensystem einen Durchflussmesser eine Einrichtung zum Ermitteln des Brennstoffvorrats im Brennstoffvorratbehälter.

Die der Erfindung zugrundeliegende Aufgabe wird ebenfalls gelöst durch ein Brennstoffzellensystem, das eine erfindungsgemäße Überwachungsvorrichtung aufweist.

Die Erfindung ist besonders nützlich für ein Brennstoffzellensystem, welches so ausgebildet ist, dass es über eine austauschbare Brennstoffpatrone mit Brennstoff versorgt werden kann.

Vorzugsweise umfasst das Brennstoffzellensystem eine Einrichtung zum Erzeugen eines Unterdrucks im Brennstoffzellensystem, so dass zum Fördern von Brennstoffstrom in das Brennstoffzellensystem keine Förderpumpe erforderlich ist. Die Steuerung des Brennstoffstroms kann mittels eines steuerbaren Regelventils erfolgen.

Zusammenfassend bleibt festzuhalten, dass es die Erfindung ermöglicht, die Versorgung einer Brennstoffzelle mit Brennstoff zuverlässig sicherstellen und ein Nachlassen bzw. einen Ausfall der Brennstoffversorgung - gleich aus welchem Grund - schnell zu erkennen und es damit zu ermöglichen, die Brennstoffzelle rechtzeitig in einen sicheren Betriebszustand zu bringen.

Um dies zu verdeutlichen, wird die Erfindung nachfolgend anhand besonders bevorzugter Ausführungsformen unter Bezugnahme auf die beigefügte Figur beschrieben. Es wird ausdrücklich betont, dass diese Figuren von schematischer Natur sind und die darin abgebildeten Ausführungsformen allein der besseren Veranschaulichung der Erfindung dienen und keinesfalls als bindend oder einschränkend interpretiert werden dürfen.

Es zeigen:
- Figur 1:: einen typischen herkömmlichen Aufbau zur Brennstoffversorgung eines Brennstoffzellensystems;
- Figur 2:: eine erfindungsgemäße Modifikation des in Figur 1 skizzierten Aufbaus;
- Figuren 3-5:: drei einfache Ausführungsformen zur Veranschaulichung des erfindungsgemäßen Verfahrens;
- Figur 6:: eine Darstellung einer Anordnung zur Durchführung eines besonders bevorzugten Verfahrens zur Brennstoffversorgung eines Brennstoffzellensystems.

In den nachfolgenden Figuren bezeichnen gleiche Bezugszeichen Komponenten mit identischer oder vergleichbarer Funktion. Um unnötige Wiederholungen zu vermeiden, werden diese Komponenten bzw. ihre Funktionen nur bei ihrer erstmaliger Erwähnung ausführlich beschrieben.

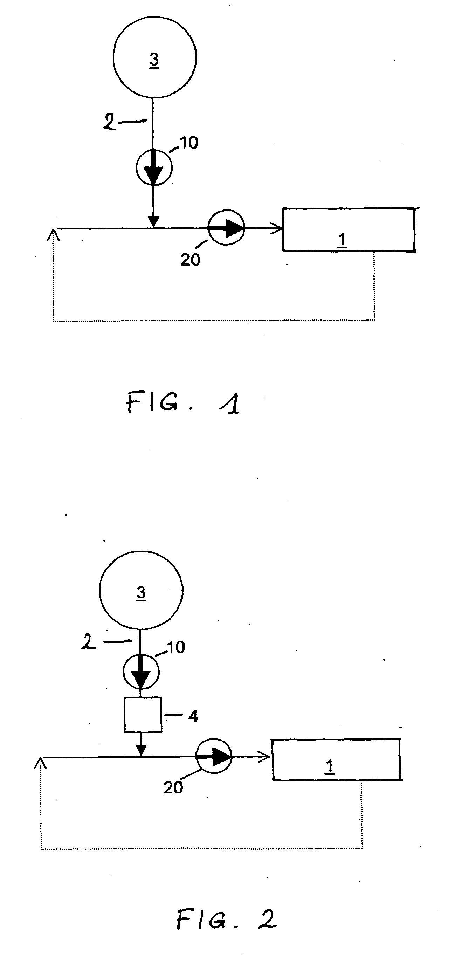

Figur 1 veranschaulicht den Aufbau zur Brennstoffversorgung eines herkömmlichen Brennstoffzellensystems. Das Brennstoffzellensystem umfasst als Hauptkomponente eine Brennstoffzelle 1. Andere nachfolgend beschriebene Komponenten, wie Steuereinrichtungen, Pumpen, Leitungen, etc., können - je nach Zweckmäßigkeit - entweder ebenfalls als interne Bestandteile des Brennstoffellensystems oder als separate, externe Vorrichtungen vorgesehen sein.

Die Brennstoffzelle 1 wird über einen Brennstoffvorratsbehälter 3 mit Brennstoff versorgt. Das Brennstoffzellensystem ist über eine Zuleitung 2 mit dem Brennstoffvorratsbehälter 3 verbunden. Beim skizzierten Ausführungsbeispiel weist das Brennstoffzellensystem eine anodenseitige Kreislaufströmung auf, die durch eine Kreislaufpumpe 20 aufrecht erhalten wird. Die Kreislaufströmung ist deshalb vorgesehen, um unverbrauchten Brennstoff rückzugewinnen und den Wasserhaushalt des Systems aufrecht zu erhalten. Abfallstoffe (Verbrennungsprodukte) werden abgezweigt und der Entsorgung zugeführt (nicht abgebildet). Eine Brennstoffförderpumpe (Dosierpumpe) 10 ist in der Brennstoffzuleitung 2 vorgesehen, um frischen Brennstoff entsprechend dem Verbrauch des Brennstoffzellensystems in den anodenseitigen Kreislauf einzuspeisen.

Ein Defekt in einer der Pumpen 10, 20, ein entleerter Brennstofftank 3, ein Leck in der Zuleitung 2 oder in den Kreislaufströmungsleitungen können zu einer Unterversorgung der Brennstoffzelle 1 des Brennstoffzellensystems und als deren Folgen zu einer Zerstörung der Brennstoffzelle 1 führen.

Figur 2 veranschaulicht ein Ausführungsbeispiel, bei welchem das der Erfindung zu Grunde liegende Konzept in der in Figur 1 skizzierten herkömmlichen Brennstoffzellenanordnung implementiert wurde.

Die erfindungsgemäße Anordnung von Figur 2 unterscheidet sich von der aus dem Stand der Technik bekannten von Figur 1 dadurch, dass in der Brennstoffzuleitung 2 ein Sensor 4 vorgesehen ist, der die Brennstoffzufuhr in das Brennstoffzellensystem überwacht. Der Sensor 4 ist im einfachsten Fall so eingerichtet, dass er ein Warnsignal ausgibt, wenn der Durchfluss verschwindet oder einen vorgegebenen oder gemäß dem Bedarf des Brennstoffzellensystems dynamisch angepassten Wert unterschreitet. Das Warnsignal weist den Benutzer darauf hin, Maßnahmen zu ergreifen, um das Brennstoffzellensystem und insbesondere die Brennstoffzelle 1 vor Beschädigungen oder Zerstörung zu schützen.

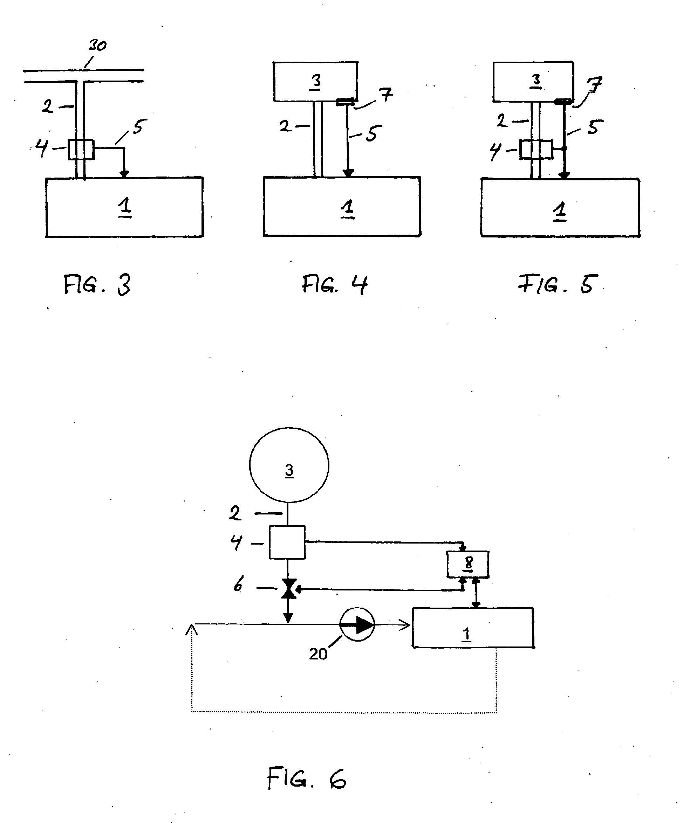

Erhöhte Sicherheit kann erreicht werden, wenn der Sensor 4 und das Brennstoffzellensystem alternativ oder zusätzlich so konfiguriert sind, dass der Sensor bei der oben geschilderten Situation ein Signal ausgibt, welches bewirkt, dass das Brennstoffzellensystem automatisch in einen sicheren Betriebszustand gebracht wird. Derartige Konfigurationen werden unter Bezugnahme von weiteren bevorzugten Ausführungsformen beschrieben, die in nachfolgenden Figuren veranschaulicht sind. In Figur 3 ist ein erstes derartiges Ausführungsbeispiel skizziert.

Die Brennstoffzelle 1 der in Figur 3 skizzierten Brennstoffzellenanordnung wird aus einer Brennstoffversorgungsleitung 30, an die eine Brennstoffzuleitung 2 angeschlossen ist, mit Brennstoff versorgt. In der Brennstoffzuleitung 2, die von der Brennstoffversorgungsleitung 30 in das Brennstoffzellensystem abzweigt, ist ein Sensor 4 vorgesehen, der den Brennstoffstrom in das Brennstoffzellensystem überwacht. Der Sensor 4 ist über eine Signalleitung 5 mit einer Steuereinheit des Brennstoffzellensystems verbunden. Wenn der Brennstoffstrom in das Brennstoffzellensystem einen erforderlichen Wert unterschreitet, gibt der Sensor 4 ein entsprechendes Signal über die Signalleitung 5 aus, worauf die Steuereinheit die Durchführung der notwendigen Sicherheitsmassnahmen einleitet. Über die Signalleitung 5 können auch ständig oder in vorgegebenen Zeitabschnitten Durchflusswerte an die Steuereinheit des Brennstoffzellensystems ausgegeben werden. Ferner können auch Signale in der umgekehrten Richtung von der Steuereinheit des Brennstoffzellensystems an den Sensor 4 ausgegeben werden, beispielsweise um einen Durchflusssollwert an den jeweils aktuellen Verbrauch des Brennstoffzellensystems anzupassen.

Eine Ausführungsform aus dem Stand des Technik, die das Verständnis des Erfindung erleichtert, ist in Figur 4 skizziert.

Bei der Ausführungsform von Figur 4 erfolgt die Brennstoffversorgung über einen Brennstoffvorratsbehälter 3. Bei der skizzierten Ausführungsform ist ein Sensor 7 am oder im Boden des Vorratsbehälters 3 vorgesehen, der über die Signalleitung 5 ein Signal für die Steuereinheit des Brennstoffzellensystems ausgibt, wenn der Flüssigkeitsspiegel im Brennstoffbehälter 3 auf das Niveau des Bodens absinkt.

Die in den Figuren 3 und 4 skizzierten Prinzipien sind bei der in Figur 5 gezeigten besonders bevorzugten Ausführungsform miteinander kombiniert. Durch die beiden Sensoren 4 und 7 wird dabei ein weiter erhöhtes Maß an Sicherheit gewährleistet.

An Stelle des in den Figuren 4 und 5 skizzierten Sensors 7 kann auch ein Füllstandsmesser vorgesehen sein, der ständig aktuelle Werte über den Brennstoffvorrat im Brennstoffvorratsbehälter 3 an die Steuereinheit des Brennstoffzellensystems liefert. Mit diesen Werten kann beispielsweise abgeschätzt werden, wann ein Austauschen bzw. Wiederbefüllen des Brennstoffbehälters 3 erforderlich sein wird. Die gemessenen bzw. berechneten Werte können zur Anzeige gebracht werden und als nützliche Information an einer Anzeigevorrichtung wiedergegeben werden.

Figur 6 dient der Veranschaulichung einer weiteren besonders bevorzugten Ausführungsform der vorliegenden Erfindung.

Die in Figur 6 gezeigte Ausführungsform kann als Modifikation der in Figur 2 skizzierten Ausführungsform aufgefasst werden. In der Figur 6 ist explizit eine Steuereinheit 8 dargestellt. Diese Steuereinheit 8 kann eine externe Steuereinheit sein, aber - und dies bevorzugt - auch Teil des Brennstoffzellensystems sein. Es sei an dieser Stelle ausdrücklich darauf hingewiesen, dass eine derartige Steuereinheit auch bei den oben beschriebenen Ausführungsformen der Figuren 2 bis 5 vorgesehen sein kann, auch wenn sie in den Figuren der vorangehend geschilderten Ausführungsformen nicht explizit abgebildet ist. Insbesondere wird betont, dass die Steuereinheit 8 nicht den wesentlichen Unterschied zwischen den Ausführungsformen von Figur 2 und Figur 6 darstellt. Vielmehr besteht der entscheidende Vorteil der Weiterbildung von Figur 6 gegenüber dem Ausführungsbeispiel von Figur 2 darin, dass auf eine Förderpumpe in der Brennstoffzuleitung 2 (in Figur 2: Förderpumpe 10) verzichtet werden kann. Dies ermöglicht eine erhebliche Systemvereinfachung und damit eine Kosteneinsparung.

Bei der Ausführungsform von Figur 6 wird der Brennstoff durch den Unterdruck, der in der Ansaugleitung der Kreislaufpumpe 20 herrscht, in den Systemkreislauf gesogen. Die Ansaugleitung kann hierfür mit künstlichen Strömungswiderständen (Blenden) ausgestattet sein, die das Entstehen eines Unterdrucks fördern. Ein Ventil 6 in der Zuleitung 2 dient der Regelung des gewünschten Massen- bzw. Volumenstroms. Der aktuell herrschende Brennstoffstrom wird dabei mit dem Sensor 4 gemessen. Das Ventil 6 wird über die Steuereinheit 8 geregelt. Hat die Brennstoffzelle 1 einen erhöhten Bedarf, so steuert die Steuereinheit 8 das Regelventil 6 mit Hilfe des Sensors 4, um den Brennstoffzustrom auf einen erwünschten Wert zu bringen.

Die vorliegende Erfindung und ihre Vorteile wurden zuletzt anhand von bevorzugten Ausführungsbeispielen erläutert. Der Schutzbereich der vorliegenden Erfindung wird aber allein durch die nachfolgenden Patentansprüche definiert.

## Patentansprüche

1. Verfahren zum Betreiben eines Brennstoffzellensystems, mit den Schritten:
Überwachen eines Brennstoffstroms in das Brennstoffzellensystem,
Ausgeben eines Signals, wenn der Brennstoffstrom für eine Brennstoffversorgung des Brennstoffzellensystems nicht ausreichend ist.

2. Verfahren nach Anspruch 1, mit dem weiteren Schritt:
Einleiten von Vorsorgemaßnahmen zum Schützen des Brennstoffzellensystems vor Schäden, wenn der Brennstoffstrom für die Brennstoffversorgung des Brennstoffzellensystems nicht ausreichend ist.

3. Verfahren nach einem der vorangegangenen Ansprüche, wobei das Überwachen des Brennstoffstroms das Ermitteln des Brennstoffstroms umfasst.

4. Verfahren nach einem der vorangegangenen Ansprüche, wobei das Überwachen das Ausgeben eines Messsignals in vorgegebenen zeitlichen Abständen oder auf Anfrage umfasst.

5. Verfahren nach einem der Ansprüche 2 bis 4, wobei das Einleiten von Vorsorgemaßnahmen das Umschalten des Brennstoffzellensystems in einen sicheren Betriebszustand umfasst.

6. Verfahren nach einem der Ansprüche 2 bis 5, wobei das Einleiten von Vorsorgemaßnahmen das Umschalten der Brennstoffzufuhr auf eine alternative Brennstoffversorgungseinrichtung umfasst.

7. Verfahren nach einem der vorangegangenen Ansprüche, wobei ein Strömen von Brennstoffstrom in das Brennstoffzellensystem durch Erzeugen eines Unterdrucks im Brennstoffzellensystem verursacht wird.

8. Überwachungsvorrichtung für eine Brennstoffversorgungsvorrichtung eines Brennstoffzellensystems, umfassend:
einen Sensor (4) zum Überwachen eines Brennstoffstroms in das Brennstoffzellensystem und zum Ausgeben eines Signals, wenn der Brennstoffstrom für eine Brennstoffversorgung des Brennstoffzellensystems nicht ausreichend ist.

9. Überwachungsvorrichtung nach Anspruch 8, ferner umfassend:
eine Steuereinrichtung (8) zum Empfangen des Signals des Sensors (4) und zum Einleiten von Vorsorgemaßnahmen, um das Brennstoffzellensystem vor Schäden zu schützen, wenn der Brennstoffstrom für die Brennstoffversorgung des Brennstoffzellensystems nicht ausreichend ist.

10. Überwachungsvorrichtung nach Anspruch 8 oder 9, wobei der Sensor (4) zum Überwachen des Brennstoffstroms in das Brennstoffzellensystem einen Durchflussmesser umfasst.

11. Brennstoffzellensystem, umfassend eine Überwachungsvorrichtung nach einem der Ansprüche 8 bis 10.

12. Brennstoffzellensystem nach Anspruch 11, welches so ausgebildet ist, dass es über eine austauschbare Brennstoffpatrone mit Brennstoff versorgt werden kann.

13. Brennstoffzellensystem nach Anspruch 11 oder 12, ferner umfassend:
eine Einrichtung (20) zum Erzeugen eines Unterdrucks im Brennstoffzellensystem.

## Claims

1. A method of operating a fuel cell system, comprising the steps:
monitoring a flow of fuel into the fuel cell system,
outputting a signal if the flow of fuel is insufficient for supplying fuel to the fuel cell system.

2. A method according to claim 1, comprising the additional step:
initiating precautionary measures for protecting the fuel cell system against damage if the flow of fuel is insufficient for supplying fuel to the fuel cell system.

3. A method according to one of the preceding claims, wherein the monitoring of the flow of fuel comprises the determination of said flow of fuel.

4. A method according to one of the preceding claims, wherein the monitoring comprises outputting a measurement signal at predetermined time intervals or on request.

5. A method according to one of the claims 2 to 4, wherein the initiation of precautionary measures comprises the switching over of the fuel cell system to a safe operating condition.

6. A method according to one of the claims 2 to 5, wherein the initiation of precautionary measures comprises the switching over of the fuel supply to an alternative fuel supply unit.

7. A method according to one of the preceding claims, wherein the flow of fuel is caused to flow into the fuel cell system by generating a negative pressure in said fuel cell system.

8. A monitoring device for a fuel supply device of a fuel cell system, comprising:
a sensor (4) for monitoring a flow of fuel into said fuel cell system and for outputting a signal if the flow of fuel is insufficient for supplying fuel to the fuel cell system.

9. A monitoring device according to claim 8, further comprising:
a control unit (8) for receiving the signal of the sensor (4) and for initiating precautionary measures so as to protect the fuel cell system against damage if the flow of fuel is insufficient for supplying fuel to the fuel cell system.

10. A monitoring device according to claim 8 or 9, wherein the sensor (4) for monitoring the flow of fuel into the fuel cell system comprises a flow meter.

11. A fuel cell system, comprising a monitoring device according to one of the claims 8 to 10.

12. A fuel cell system according to claim 11, which is designed such that it can be supplied with fuel via a replaceable fuel cartridge.

13. A fuel cell system according to claim 11 or 12, further comprising:
a means (20) for generating a negative pressure in the fuel cell system.

## Revendications

1. Procédé de gestion d'un système de pile à combustible, comprenant les étapes consistant à :
surveiller un débit de combustible entrant dans le système de pile à combustible,
émettre un signal lorsque le débit de combustible d'une alimentation en combustible du système de pile à combustible est insuffisant.

2. Procédé selon la revendication 1, comprenant l'étape supplémentaire consistant à :
initier des mesures préventives pour protéger le système de pile à combustible contre les dégâts lorsque le débit d'alimentation en combustible du système de pile à combustible est insuffisant.

3. Procédé selon l'une des revendications précédentes, dans lequel la surveillance du débit de combustible comprend la détermination du débit de combustible.

4. Procédé selon l'une des revendications précédentes, dans lequel la surveillance comprend l'émission d'un signal de mesure à intervalles temporels prédéterminés ou sur demande.

5. Procédé selon l'une des revendications 2 à 4, dans lequel l'initiation de mesures préventives comprend la commutation du système de pile à combustible dans un état de fonctionnement de sécurité.

6. Procédé selon l'une des revendications 2 à 5, dans lequel l'initiation de mesures préventives comprend la commutation de l'apport de combustible sur un dispositif d'alimentation en combustible alternatif.

7. Procédé selon l'une des revendications précédentes, dans lequel l'écoulement du combustible entrant dans le système de pile à combustible est provoqué par la création d'une sous-pression dans le système de pile à combustible.

8. Dispositif de surveillance pour un dispositif d'alimentation en combustible d'un système de pile à combustible, comprenant :
un capteur (4) pour surveiller un débit de combustible entrant dans le système de pile à combustible et pour émettre un signal lorsque le débit de combustible d'une alimentation en combustible du système de pile à combustible est insuffisant.

9. Dispositif de surveillance selon la revendication 8, comprenant en outre :
un dispositif de commande (8) pour recevoir le signal du capteur (4) et pour initier des mesures préventives afin de protéger le système de pile à combustible contre les dégâts lorsque le débit d'alimentation en combustible du système de pile à combustible est insuffisant.

10. Dispositif de surveillance selon la revendication 8 ou 9, dans lequel le capteur (4) de surveillance du débit de combustible entrant dans le système de pile à combustible comprend un débitmètre.

11. Système de pile à combustible comprenant un dispositif de surveillance selon l'une des revendications 8 à 10.

12. Système de pile à combustible selon la revendication 11, construit de telle façon qu'il puisse être alimenté en combustible à l'aide de cartouches de combustible remplaçables.

13. Système de pile à combustible selon la revendication 11 ou 12, comprenant en outre :
un dispositif (20) pour créer une sous-pression dans le système de pile à combustible.
